# EUROPÄISCHE PATENTANMELDUNG

(11) **EP 1 357 462 A2**
(43) Veröffentlichungstag der Anmeldung: **29.10.2003**
(21) Anmeldenummer: 03001914.5
(22) Anmeldetag: 30.01.2003
(51) Int. Cl.: G06F 3/033

(54) **Verfahren zur Bedienungssteuerung von elektronischen Geräten und elektronisches Gerät hierzu**

(30) Priorität: 26.04.2002 DE 10218680
(71) Anmelder: ROBERT BOSCH GMBH, 70442 Stuttgart (DE)
(72) Erfinder: Kussmann, Holger, 31180 Giesen (DE); Mecke, Sven, 31139 Hildesheim (DE)

(57) **Zusammenfassung**

Ein Verfahren zur Bedienungssteuerung von elektronischen Geräten (1) mit Bedienungseingabemitteln (7), wobei Eigenschaften der durch Bedienereingabe auswählbaren Funktionen und/oder Elemente in Kategorien geordnet jeweils in Kategorielisten (4) abgespeichert und die Kategorielisten (4) untereinander hierarchisch verknüpft sind, hat die Schritte:
a) Auswählen einer Ausgangskategorie und Zugreifen auf die Kategorieliste (4) der Ausgangskategorie,
b) Auswählen einer Eigenschaft aus der gewählten Kategorieliste (4),
c) Zugreifen auf die in der Hierarchie folgende verknüpfte Kategorieliste (4),
d) automatisches Auswählen mindestens einer bevorzugten Eigenschaft aus der Kategorieliste (4), die die ausgewählte Eigenschaft aus der vorhergehenden Kategorieliste (4) erfüllt, und
e) Wiederholen der Schritte c) und d) solange, bis die ausgewählte Eigenschaft eindeutig eine auswählbare Funktion oder ein Element oder eine Reihe davon definiert.

## Beschreibung

Die Erfindung betrifft ein Verfahren zur Bedienungssteuerung von elektronischen Geräten mit Bedienungseingabemitteln, wobei Eigenschaften der durch Bedienereingabe auswählbaren Funktionen und/oder Elemente in Kategorien geordnet jeweils in Kategorielisten abgespeichert und die Kategorielisten untereinander hierarchisch verknüpft sind.

Die Erfindung betrifft weiterhin ein elektronisches Gerät, insbesondere zum Einbau in Fahrzeugen, mit einem Prozessor, mit Speichermitteln und mit Bedienereingabemitteln, wobei in den Speichermitteln Kategorielisten mit in Kategorien geordneten Eigenschaften der durch Bedienereingabe auswählbaren Funktionen und/oder Elemente abgespeichert sind und die Kategorielisten hierarchisch miteinander verknüpft sind.

Die Erfindung betrifft ferner ein Computerprogramm mit Programmcodemitteln zur Durchführung des oben genannten Verfahrens.

Bei der Bedienung von elektronischen Geräten können in der Regel eine Vielzahl von Funktionen ausgewählt werden. Hierzu ist eine Bedienerführung mit Hilfe von Menüs hinreichend bekannt, wobei der Bediener die Menüpunkte nacheinander hierarchisch durchlaufen muss und gewünschte Eigenschaften aus den hierarchisch gegliederten Menülisten auswählen kann. Eine solche Bedienerstörung ist besonders bei elektronischen Geräten problematisch, die in Fahrzeugen eingebaut sind, da hierdurch der Fahrer mehr oder weniger von seiner eigentlichen Fahraufgabe abgelenkt wird.

Zudem werden beispielsweise bei Unterhaltungsmedien, wie CD-Spieler mit CD-ROM-Wechsler, DVD-Abspielgeräte etc. eine erhebliche Anzahl von Elementen, wie Musikstücken, Videos etc. zum Abruf bereitgestellt. Mit Fortschreiten der Speichertechnologie und der verfügbaren Kompressionstechniken steigt auch die Anzahl der in solchen Computergeräten bereitgestellten Datenmengen.

Aus der DE 199 52 857 C1 ist ein Verfahren bekannt, durch das ein Fahrer eines Fahrzeugs bei der Bedienung von Fahrzeugkomponenten entlastet wird. Hierzu wird der Zustand des Fahrers erkannt, um eine Steuerung des den Fahrer konfrontierenden Informationsflusses vorzunehmen und um gegebenenfalls auch Aktionen automatisch auszuführen. Je nach Gemütslage des Fahrers werden somit nur bestimmte Informationen dargestellt, so dass eine Informationsfilterung vorliegt.

In der WO 99/39281 ist ein Verfahren zum unterstützten Suchen von Informationen im Internet beschrieben, bei dem Interaktionen eines Benutzers erfasst und abgespeichert werden. Beim zukünftigen Abfragen wird auf die gespeicherten früheren Abfragen zurückgegriffen und diese zur Unterstützung der Suche verwendet.

Weiterhin ist z.B. aus dem internationalen Standard MPEG 7 (Moving Pictures Expert Group-MPEG) die Beschreibung von Informationen oder allgemeinen Inhalten mit Hilfe von sogenannten Metadaten bekannt. Beispielsweise können Musikstücke mit Hilfe der Metadaten kategorisiert werden und Suchanfragen nach ähnlichen Musikstücken mit Hilfe einer Datenbank gestellt werden.

Die Auswahl von Funktionen oder Elementen, die durch elektronische Geräte durch eine interaktive Bedienungseingabe bereitgestellt werden, ist jedoch insbesondere bei einer erheblichen Menge an auswählbaren Funktionen oder Elementen relativ aufwendig und erfordert die Aufmerksamkeit des Bedieners.

Aufgabe der Erfindung war es daher, ein verbessertes Verfahren zur Bedienungssteuerung von elektronischen Geräten zu schaffen.

Die Aufgabe wird mit dem gattungsgemäßen Verfahren erfindungsgemäß gelöst durch die Schritte:
a) Auswählen einer Ausgangskategorie und Zugreifen auf die Kategorieliste der Ausgangskategorie
b) Auswählen einer Eigenschaft aus der gewählten Liste,
c) Zugreifen auf die in der Hierarchie folgende verknüpfte Kategorieliste,
d) automatisches Auswählen mindestens einer bevorzugten Eigenschaft aus der Kategorieliste, die die ausgewählte Eigenschaft aus der vorhergehenden Kategorieliste erfüllt, und
e) Wiederholen der Schritte c) und d) solange, bis die ausgewählte Eigenschaft eindeutig eine auswählbare Funktion oder Element oder eine Reihe davon definiert.

Es wird somit vorgeschlagen, die Benutzerführung nicht mit einer hierarchischen Menüstruktur sondern anhand von Kategorielisten vorzunehmen. Hierbei werden die Eigenschaften der auswählbaren Funktionen oder Elemente, wie z.B. Musik, Nachrichten, Informationen, Lautstärkeregelung etc. nach verschiedenen Kriterien in Kategorielisten eingeordnet. Diese sind untereinander hierarchisch verknüpft und bilden somit eine Art individuelle nicht statische Baumstruktur. Die Auswahl einer Funktion oder eines Elementes erfolgt zunächst durch Auswahl einer Ausgangskategorie, innerhalb der dann auf eine Eigenschaft aus der gewählten Kategorieliste zugegriffen wird. Diese Eigenschaft kann ein Oberbegriff sein, der die Suchergebnisse einschränkt. Die Kategorieliste oder die ausgewählte Eigenschaft ist mit einer weiteren Kategorieliste verknüpft, die automatisch aufgerufen wird. In Abhängigkeit von der Bedienereingabe und/oder der ausgewählten Eigenschaft wird mindestens eine bevorzugte Eigenschaft aus der gesamten Kategorieliste ausgewählt. Die mindestens eine ausgewählte Eigenschaft muss die ausgewählte Eigenschaft aus der vorhergehenden Kategorieliste erfüllen und stellt somit eine Einschränkung der Suchanfrage dar. Die Auswahl der bevorzugten Eigenschaften einer Kategorieliste kann beispielsweise nutzerabhängig sein.

Das Zugreifen auf die in der Hierarchie folgende verknüpfte Kategorieliste und die Wiederholung der automatischen Auswahl, der bevorzugten mindestens einen Eigenschaft wird solange wiederholt, bis eine auswählbare Funktion oder ein auswählbares Element eindeutig definiert ist. Auf diese Weise kann eine Bedienungseingabe mit Hilfe einer einzigen Bedienereingabe, in der eine Anzahl von Kategorien und Eigenschaften definiert werden, automatisch durchgeführt werden. Der Bediener wird dadurch optimal entlastet und kann seine Aufmerksamkeit anderen Abläufen zuwenden.

Besonders vorteilhaft ist es, wenn die Kategorielisten ebenfalls benutzerabhängig individuell erstellt und abgespeichert sind. Auf diese Weise kann für jeden Bediener eine individuelle intelligente Bedienungssteuerung bereitgestellt werden.

Weiterhin ist es vorteilhaft, wenn die Eigenschaften in Kategorielisten nach Prioritäten bezogen auf Eigenschaften vorhergehender verknüpfter Kategorielisten geordnet sind. Die prioritätsindizierte Ordnung der bevorzugten Eigenschaften erfolgt somit nicht statisch sondern in der Abhängigkeit von den vorher ausgewählten Eigenschaften. Bei Zugriff auf eine Kategorieliste werden somit bevorzugte Eigenschaften mit einer Priorätisierung entsprechend der vorher ausgewählten Eigenschaften ausgewählt und dargestellt, so dass eine Suchanfrage iterativ eingeschränkt wird und dennoch die Eigenschaften nicht als starrer Menübaum geordnet sind, sondern unabhängig von Suchbäumen in zugehörige Kategorielisten zusammengefasst werden.

Die Prioritäten der einzelnen Eigenschaften können vorteilhafter Weise vergrößert oder verringert werden. Eine Verringerung der Priorität einer Eigenschaft erfolgt beispielsweise dann, wenn die Nutzung der zugeordneten Funktion oder Elementes nach Auswahl unterbrochen wird, bevor die Funktion oder das Element vollständig ausgeführt ist. Beispielsweise bei dem Abspielen eines Musikstücks zeigt eine Unterbrechung, dass das Musikstück dem Bediener nicht gefallen hat. Es erhält somit eine geringere Priorität als es vorher hatte.

Ebenso kann ein Erhöhen der Priorität einer Eigenschaft erfolgen, wenn die zugeordnete Funktion oder das Element nach Auswahl vollständig genutzt wurde. Eine Erhöhung der Priorität kann auch dann erfolgen, wenn die Eigenschaft, welche unmittelbar auf die Funktion oder das Element verweist, unmittelbar ausgewählt wird. Durch diesen gezielten Zugriff auf eine Funktion oder ein Element über die jetzt verknüpfte Eigenschaft wird deutlich, dass diese Funktion oder die Eigenschaft für den Benutzer eine besondere Relevanz hat. Dies ist ein Hinweis darauf, dass die Priorität der Eigenschaft erhöht werden sollte.

Weiterhin ist es vorteilhaft, eine Ausschlussliste von nicht weiter aufrufbaren Funktionen oder Elemente bereitzustellen. Sofern solche Funktionen oder Elemente in einer solchen Ausschlussliste verzeichnet sind, werden die unmittelbar mit diesen Funktionen oder Elementen verknüpften Eigenschaften aus der Kategorieliste nicht mehr als bevorzugte Eigenschaft ausgewählt. Hierzu erfolgt bei der Auswahl der bevorzugten Eigenschaften aus einer aufgerufenen Kategorieliste automatisch ein Abgleich mit der Ausschlussliste.

Weiterhin ist es vorteilhaft, eine Bedienereingabe per Spracherkennung zu erkennen, die Kategorien und Eigenschaften aus der Bedienereingabe zu analysieren und die analysierten Kategorien und Eigenschaften aus den zugehörigen Kategorielisten in der festgelegten hierarchischen Reihenfolge der betreffenden Kategorien auszuwählen. Auf diese Weise kann eine Bedienereingabe durch einen zusammengehörigen Satz zunächst aufgenommen und dann automatisch in der vorbeschriebenen Weise abgearbeitet werden. Der Bediener kann sich hierdurch auf andere Dinge als die Bedienereingabe konzentrieren.

Besonders vorteilhaft ist es, die Ausgangskategorie automatisch in Abhängigkeit von nutzerabhängig gespeicherten Präferenzen auszuwählen. Die Unterstützung der Bedienereingabe erfolgt somit abhängig von den Nutzergewohnheiten. Wenn beispielsweise ein Bediener regelmäßig seine Bedienereingabe mit einer definierten Ausgangskategorie, d. h. auf Basis von entsprechenden Präferenzen beginnt, ist diese Eingabe nicht ständig neu abrufbar, sondern es kann auf die Gewohnheit zurückgegriffen werden.

Die Aufgabe wird weiterhin durch das gattungsgemäße elektronische Gerät gelöst durch Auswahlmittel, die zur Durchführung des vorher beschriebenen Verfahrens ausgebildet sind.

Weiterhin wird die Aufgabe durch ein Computerprogramm mit Programmcodemitteln gelöst, die zur Durchführung des oben beschriebenen Verfahrens ausgebildet sind.

Die Erfindung wird nachfolgend anhand der beigefügten Zeichnungen näher erläutert.

Es zeigen:
- Figur 1 -: Blockdiagramm eines elektronischen Gerätes zur Durchführung des erfindungsgemäßen Verfahrens;
- Figur 2 -: Blockdiagramm von Kategorielisten und zugehörigen Einträgen und deren Verknüpfung zur Bedienungssteuerung;
- Figur 3 -: Blockdiagramm von Kategorielisten mit Eigenschaften bei einer vollautomatischen Bedienungssteuerung

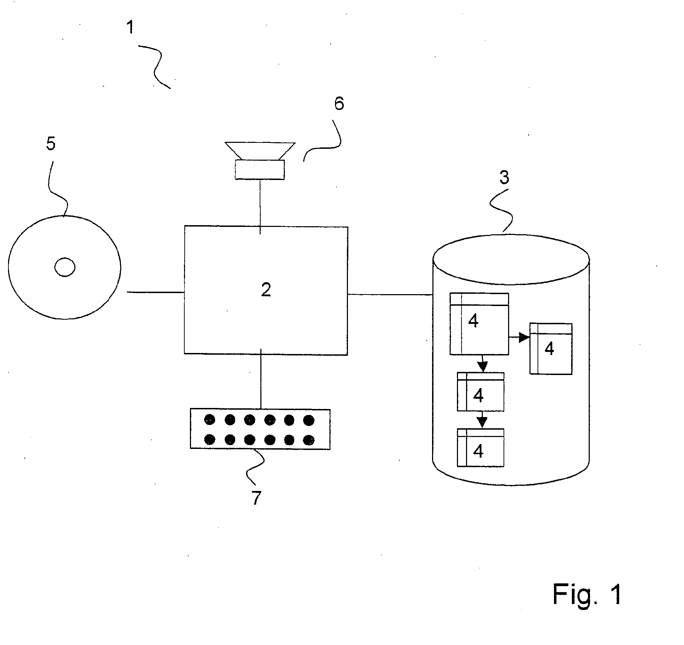

Die Figur 1 lässt ein elektronisches Gerät 1 erkennen, das im wesentlichen einen Prozessor 2 hat. Der Prozessor 2 ist mit Speichermitteln 3 verbunden, in dem Kategorielisten 4 abgelegt sind, die Eigenschaften von durch Bedienereingabe auswählbaren Funktionen oder Elementen hat. Die Funktionen oder Elemente können beispielsweise auf einem Datenträger 5, wie z.B. einer Compaktdisc CD oder einer Digital Versatile Disc DVD abgespeicherten Musikstücke oder Videos sein, die über Ausgabemittel 6 abgespielt werden.

Die Auswahl der Funktionen oder Elemente, wie beispielsweise Musikstücke, erfolgt über Bedienereingabemittel 7, die mit dem Prozessor 2 verbunden sind. Die Bedienereingabemittel 7 können beispielsweise als graphisch unterstütztes Nutzerinterface GUI mit Monitor und Tastatur und/oder als Spracheingabemittel mit Spracherkennungsfunktionalität ausgeführt sein.

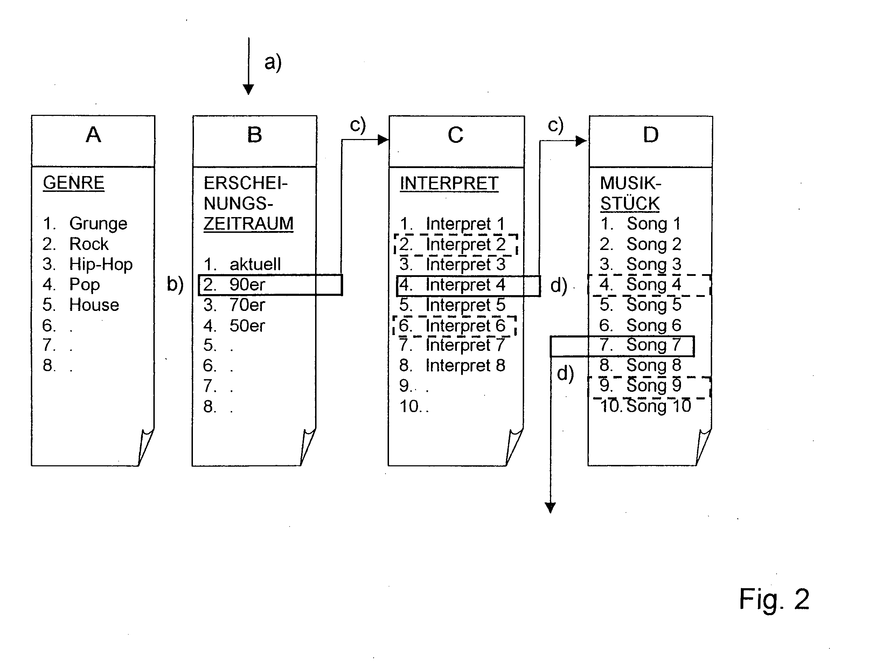

Die Bedienungssteuerung des elektronischen Gerätes 1 erfolgt durch Bedienereingabe über die Bedienungseingabemittel 7. Das Verfahren der Bedienungssteuerung wird im folgenden anhand der Figur 2 beispielhaft ausgeführt.

Zunächst wird in einem ersten Schritt a) von dem Bediener eine Ausgangskategorie, hier beispielsweise Kategorie B (Erscheinungszeitraum eines Musikstücks) ausgewählt und auf die entsprechende Kategorieliste B, hier der Ausgangskategorie B, zugegriffen.

Beispielsweise folgt der Einstieg in die Ausgangskategorie B über eine Bedienereingabe per Sprache "Ich möchte Musik aus den 90'er Jahren hören".

Dann wird eine entsprechende Eigenschaft (hier 2. 90'er) aus der gewählten Kategorieliste ausgewählt (Schritt b)). Ausgehend von der ausgewählten Eigenschaft wird in einem Schritt c) auf die in der Hierarchie folgende verknüpfte Kategorieliste C (Interpret) zugegriffen. In dieser hierarchisch folgenden Kategorieliste B werden nunmehr automatisch mindestens eine bevorzugte Eigenschaft ausgewählt. Diese ausgewählten Eigenschaften, hier Interpreten, müssen die vorhergehende Eigenschaft erfüllen. D.h. die Interpreten müssen Musikstücke aus den 90'er Jahren herausgegeben haben. Aus allen verfügbaren Eigenschaften der Kategorieliste B werden eine Anzahl N der am meisten favourisierten Eigenschaften hervorgehoben. Von diesen N-Eigenschaften wird eine Eigenschaft, beispielsweise der Interpret 4, ausgewählt. Dann erfolgt wiederum eine Zugriff auf die in der Hierarchie folgende verknüpfte Kategorie D, hier Musikstück. Wiederum wird mindestens eine bevorzugte Eigenschaft ausgewählt, hier Song 11, 13, 14 und 16, welche die vorhergehenden Eigenschaften erfüllen, d.h. mit Erscheinungszeitraum der 90'er Jahre und vom Interpreten sind. Diese ausgewählten Eigenschaften, die unmittelbar mit Elementen, nämlich den zugehörigen Musikstücken und Funktionen, d.h. dem Abspielen der Musikstücke, verknüpft sind, werden dem Bediener zur Auswahl angeboten. Beispielsweise wird der Song 7 als präferierte Eigenschaft ausgewählt und abgespielt.

Gleichermaßen können die bevorzugten Eigenschaften, d.h. die Musikstücke 11, 13, 14 und 16, automatisch alle ausgewählt und hintereinander abgespielt werden. Dann erübrigt sich eine weitere Auswahl durch den Bediener.

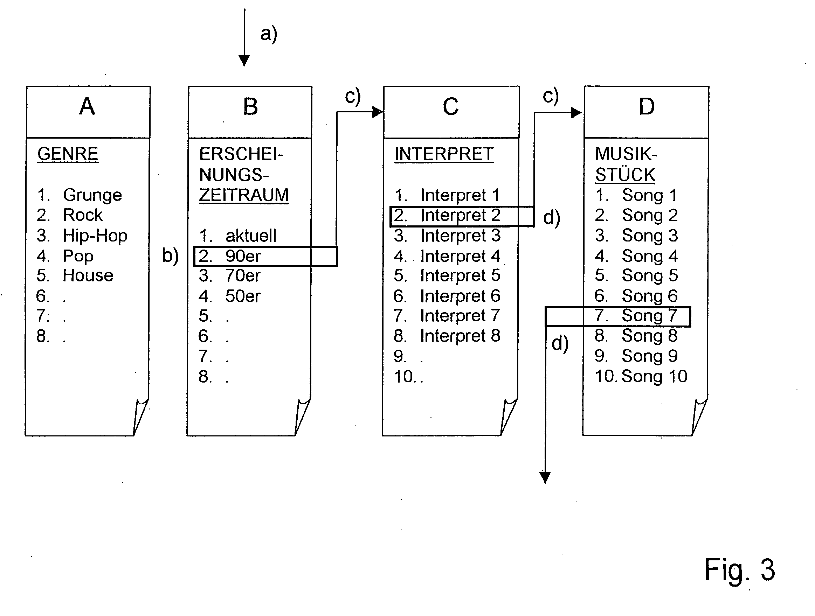

Die Figur 3 lässt eine weitere Ausführungsform des erfindungsgemäßen Verfahrens anhand eines Blockdiagramms erkennen, das mehrere Kategorielisten 4 zeigt.

Wiederum erfolgt eine Bedienereingabe über ein Sprachbefehl, beispielsweise "Ich möchte Musik aus den 90'er Jahren hören".
Anschließend wird automatisch nach Analyse der Spracheingabe über die Schlüsselwörter "Musik" und "90'er Jahre" die Ausgangskategorie B (Erscheinungszeitraum) und die passende Eigenschaft in der Kategorieliste, d.h. 90'er ausgewählt und auf die in der Hierarchie folgende verknüpfte Kategorieliste C zugegriffen. Dort werden aus den vorhandenen Eigenschaften zunächst die Eigenschaften selektiert, welche die vorhergehende Eigenschaft, d.h. 90'er Jahre erfüllt. In der Liste der Eigenschaften der Kategorieliste C wird dann die am meisten favorisierte Eigenschaft, hier Interpret 2, automatisch ausgewählt und auf die folgende hierarchisch verknüpfte Kategorieliste D (Musikstück) zurückgegriffen. Wiederum wird aus den verfügbaren Eigenschaften der Kategorieliste D eine Selektion dahingehend vorgenommen, dass die Eigenschaften ausgewählt werden, die die vorhergehenden Eigenschaften (90'er und Interpret 2) erfüllen. Von diesen Eigenschaften wird die am meisten favorisierte Eigenschaft (Song 7) ausgewählt und abgespielt. Die Favorisierung einzelner Elemente wird mit Hilfe von Prioritätsindizes gesteuert. So kann die Priorität einer Eigenschaft verringert werden, wenn die Nutzung der zugeordneten Funktion oder des Elementes, beispielsweise des Abspielen eines Musikstücks, vor Beendigung der Ausgabe unterbrochen wird. Der Abbruch der Wiedergabe zeigt, dass der Benutzer die Funktion bzw. das Element nicht favorisiert.

Die Priorität der Eigenschaft kann jedoch auch erhöht werden, wenn die zugeordnete Funktion oder das Element nach Auswahl vollständig genutzt und/oder die Eigenschaft, die mit der Funktion oder dem Element unmittelbar verknüpft ist, unmittelbar ausgewählt wird. Beispielsweise erfolgt bei einem direkten Zugriff auf ein Element in der Kategorieliste D (Musikstück) eine Prioritätserhöhung.

Die Bedienungssteuerung variiert entsprechend der gewählten Ausgangskategorie und der Anzahl von weiteren vorgegebenen Eigenschaften, die als Nebenbedingung von dem Bediener eingegeben werden. Das Prinzip der hierarchisch verknüpften Kategorielisten und der prioritätsgesteuerten Auswahl von Eigenschaften bleibt hingegen erhalten.

Der Aufbau der Kategorielisten kann beispielsweise mit Hilfe von Metadaten erfolgen, wie sie dem Standard MPEG 7 (Moving Pictures Expert Group) definiert sind. Die Eigenschaften und die Kategoriezuordnung von Funktion oder Elementen kann beispielsweise in der Funktion oder dem Element implizit enthalten sein. So können Musikstücke beispielsweise die entsprechenden Metadaten beinhalten. Alternativ hierzu können die Metadaten zur Einordnung von Funktion oder Elementen in Kategorielisten über eine eindeutige Identifikationsnummer zu jeder Funktion bzw. zu jedem Element über Funkdatenübertragung von einem externen Server geladen werden.

Weiterhin können Eigenschaften und Kategorielisten auch durch den Nutzer individuell eingegeben werden.

## Patentansprüche

1. Verfahren zur Bedienungssteuerung von elektronischen Geräten (1) mit Bedienungseingabemitteln (7), wobei Eigenschaften der durch Bedienereingabe auswählbaren Funktionen und/oder Elemente in Kategorien geordnet jeweils in Kategorielisten (4) abgespeichert und die Kategorielisten (4) untereinander hierarchisch verknüpft sind,
**gekennzeichnet durch**,
a) Auswählen einer Ausgangskategorie und Zugreifen auf die Kategorieliste (4) der Ausgangskategorie,
b) Auswählen einer Eigenschaft aus der gewählten Kategorieliste (4),
c) Zugreifen auf die in der Hierarchie folgende verknüpfte Kategorieliste (4),
d) automatisches Auswählen mindestens einer bevorzugten Eigenschaft aus der Kategorieliste (4), die die ausgewählte Eigenschaft aus der vorhergehenden Kategorieliste (4) erfüllt, und
e) Wiederholen der Schritte c) und d) solange, bis die ausgewählte Eigenschaft eindeutig eine auswählbare Funktion oder ein Element oder eine Reihe davon definiert.

2. Verfahren nach Anspruch 1, **dadurch gekennzeichnet, dass** die Kategorielisten (4) benutzerabhängig individuell erstellt und abgespeichert sind.

3. Verfahren nach Anspruch 1 oder 2, **dadurch gekennzeichnet, dass** die Eigenschaften in den Kategorielisten (4) nach Prioritäten bezogen auf Eigenschaften vorhergehender verknüpfter Kategorielisten (4) geordnet sind.

4. Verfahren nach Anspruch 3, **gekennzeichnet durch** Verringern der Priorität einer Eigenschaft, wenn die Nutzung der zugeordneten Funktion oder Element nach Auswahl unterbrochen wird.

5. Verfahren nach Anspruch 3 oder 4, **gekennzeichnet durch** Erhöhen der Priorität einer Eigenschaft, wenn die zugeordnete Funktion oder Element nach Auswahl vollständig genutzt und/oder die Eigenschaft unmittelbar ausgewählt wird.

6. Verfahren nach einem der vorhergehenden Ansprüche, **gekennzeichnet durch** eine Ausschlussliste für nicht weiter aufrufbare Funktionen oder Elemente, wobei die mit diesen Funktionen oder Elementen unmittelbar verknüpften Eigenschaften aus der Kategorieliste (4) **durch** Zugriff auf die Ausschlussliste nicht mehr als bevorzugte Eigenschaft ausgewählt wird.

7. Verfahren nach einem der vorhergehenden Ansprüche, **gekennzeichnet durch** Spracherkennung einer Bedienereingabe, Analyse von Kategorien und Eigenschaften aus der Bedienereingabe und Auswählen der analysierten Kategorien und Eigenschaften aus den zugehörigen Kategorielisten (4) in der festgelegten hierarchischen Reihenfolge der betreffenden Kategorien.

8. Verfahren nach einem der vorhergehenden Ansprüche, **dadurch gekennzeichnet, dass** das Auswählen der Ausgangskategorie automatisch in Abhängigkeit von nutzerabhängig gespeicherten Präferenzen erfolgt.

9. Elektronisches Gerät, insbesondere zum Einbau in Fahrzeuge, mit einem Prozessor, mit Speichermitteln (3) und mit Bedienereingabemitteln (7), wobei in den Speichermitteln (3) Kategorielisten (4) mit in Kategorien geordneten Eigenschaften der durch Bedienereingabe auswählbaren Funktion und/oder Elemente abgespeichert sind und die Kategorielisten (4) hierarchisch miteinander verknüpft sind, **gekennzeichnet durch**, Auswahlmittel zum
a) Auswählen einer Ausgangskategorie und Zugreifen auf die Kategorieliste (4) der Ausgangskategorie,
b) Auswählen einer Eigenschaft aus der gewählten Liste,
c) Zugreifen auf die in der Hierarchie folgende verknüpfte Kategorieliste (4),
d) automatisches Auswählen mindestens einer bevorzugten Eigenschaft aus der Kategorieliste (4), die die ausgewählte Eigenschaft aus der vorhergehenden Kategorieliste (4) erfüllt, und
e) Wiederholen der Schritte c) und d) solange, bis die ausgewählte Eigenschaft eindeutig eine auswählbare Funktion oder Element oder eine Reihe davon definiert.

10. Elektronisches Gerät nach Anspruch 9, **dadurch gekennzeichnet, dass** die Auswahlmittel weiterhin zur Durchführung des Verfahrens nach einem der Ansprüche 2 bis 8 ausgebildet sind.

11. Computerprogramm mit Programmcodemitteln zur Durchführung des Verfahrens nach einem der Ansprüche 1 bis 8, wenn das Computerprogramm auf einer prozessorgesteuerten Rechnereinheit ausgeführt wird.

12. Computerprogramm nach Anspruch 11, wobei die Programmcodemittel auf einem computerlesbaren Datenträger abgespeichert sind.
